# EUROPEAN PATENT APPLICATION

(11) **EP 0 674 922 A2**
(43) Date of publication of application: **04.10.1995**
(21) Application number: 95102297.9
(22) Date of filing: 17.02.1995
(51) Int. Cl.: A63B 21/00, H02K 49/04

(54) **Fitness equipment apparatus**

(30) Priority: 17.02.1994 JP 20519/94
(71) Applicant: COMBI CORPORATION, Chiyoda-ku, Tokyo (JP)
(72) Inventor: Hata, Hideo, c/o Combi Corporation, Urawa-shi, Saitama (JP); Tsuruoka, Hideki, c/o Combi Corporation, Urawa-shi, Saitama (JP); Arai, Kazuhiko, c/o Combi Corporation, Urawa-shi, Saitama (JP)
(74) Representative: Füchsle, Klaus, Dipl.-Ing.

(57) **Abstract**

Fitness equipment is described including a frame part, an operation part, a drive part and a control part. The drive part includes a load device (1) in which a pair of rotary disks (2) are disposed on a rotary load shaft (3) in parallel to each other, and an electromagnet (4) is disposed on the side surface side of the two rotary disks (2). The load device (1) is arranged such that a magnetic flux generated by the electromagnet (4) can be applied to the two rotary disks (2) to thereby apply a brake torque to the rotation of the two rotary disks (2). The drive part, including the load device (1), is connected to the operation part to be operated by an exerciser, and the load of the drive part is controlled by the control part to allow the optimum work-out load to be applied to the exerciser, thereby allowing the exerciser to achieve a desired work-out.

## Description

### BACKGROUND OF THE INVENTION

### Field of the Invention:

The present invention relates to fitness equipment which includes a compactly structured load device.

### Related Art:

In recent years, various types of fitness equipment have been developed for various aged users aimed at building up the physical strength of the user.

For example, climber-type fitness equipment is known in which there are provided a pair of right and left crank pedals respectively drivable in the vertical direction. In such a device, the vertical driving motion of the right and left crank pedals is transmitted to a load device so that the resistance to the vertical driving motion of the crank pedals can be controlled. Also, load equipment such as a treadmill is known in which, when an exerciser standing on an endless belt wound around rollers walks or runs on the endless belt to move the endless belt, the rollers are rotationally driven by the movement of the endless belt and the rotational driving motion of the rollers is transmitted to a load device, so that the resistance to the user can be controlled. Rowing equipment is known in which, an exerciser grasps a rope wound around a drum with both hands while bending both legs and bends body forwardly. The exerciser then extends their bent legs and at the same time moves the position of the whole body while extending backwardly to thereby pull out the rope. The drum is thus rotationally driven and the rotational driving motion of the drum is transmitted to a load device so that the resistance to rotation of the drum in one direction thereof can be controlled. Upper arm training equipment is known in which a rope is wound around a drum disposed under a chair. The end of the rope is guided and positioned over the shoulder of an exerciser sitting on the chair along the back of the chair, and, in this state, if the exerciser grasps the end portion of the rope with both hands and thrusts both hands out forwardly to extend their arms, then the drum can be rotationally driven. The rotational driving motion of the drum is transmitted to a load device so that the resistance can be controlled. Leg training equipment is known in which the end portion of a rope is wound around a drum disposed under a chair and is guided in front of the chair and is then secured to the ankle of an exerciser sitting on the chair. In this state, if the exerciser kicks out his or her foot forwardly to thereby pull the rope from the drum, then the drum is rotationally driven and the rotational driving motion of the drum is transmitted to a load device.

However, most of the conventional load devices employ a current brake which, due to the magnetic field of an exciting coil, generates an eddy current in an object (an eddy current plate) to which a brake torque should be applied. When compared with a load device wherein a given brake torque is applied due to mechanical frictional force, the load device of the eddy current brake type is advantageous in that the device exhibits less mechanical wear and can be controlled more easily. On the other hand, when controlling the load with respect to the object, that is, controlling the brake torque to a desired level, the control portion of the conventional load device of the eddy current brake type varies irregularly due to the varying speeds. This makes it very difficult to calculate the quantity of motion and the like with accuracy. Also, in the load device of the eddy current brake type, the structure for forming a magnetic path is complicated.

To solve the above-noted problems associated with eddy current brakes, for example, (Japanese Patent Publication No. 2-45905) discloses a load device in which a brake torque can be adjusted easily, the quantity of motion of an exerciser can be calculated with ease, and the brake torque can be set at an arbitrary and given value. This load device is used in a stepper type fitness apparatus in which an exerciser steps down on pedals to thereby apply a load to the pedaling motion. That is, this reference discloses a load device which is used to apply a load to a load shaft to be rotated at a rotation speed equal to or greater than a given rotation speed. This load device includes a rotary disk to be connected to and rotated by the load shaft and an electromagnet disposed in such a manner that it holds the main surface of the rotary disk between two portions thereof but is not in contact with the rotary disk. A brake torque is thus applied to the rotary disk due to the magnetic flux that crosses the surface of the rotary disk. The electromagnet included in this load device uses a C-shaped core and is arranged such that the mutually opposing opening end faces of the core hold the main surface of the rotary disk between them. For this reason, in order to increase the brake torque to a desired value, it is necessary to use a rotary disk having a large diameter, so that the load device inevitably must have a large moment of inertia. That is, such a load device must be large in size because to apply a strong brake torque.

### SUMMARY OF THE INVENTION

The present invention is direct to eliminating the drawbacks found in the above-mentioned conventional fitness equipment. Accordingly, it is an object of the invention to a provide fitness equipment apparatus including a frame part , an operation part , a drive part, and a control part. In the present fitness invention, the drive part includes a load device, in which a pair of rotary disks are disposed in parallel on a rotary load shaft, an electromagnet is disposed on the side surfaces of the rotary disks, and a magnetic flux due to the electromagnet is applied to the two rotary disks to thereby give a brake torque to the rotation of the two rotary disks. The drive part is connected to the operation part to be operated by an exerciser, and the load imparted by the drive part is controlled by the control part to the optimum load to be applied to the exerciser, so that the exerciser can exert a desired amount of energy.

According to the load device employed in the present invention, since the side surfaces of the pair of rotary disks are disposed to be received in two slits respectively formed between a stator core and a front stator core and, when compared with the conventional single rotary disk type, the radii of the two rotary disks are reduced to one half thereof, the adjustment of the brake torque due to the control current can be made easily. Also, the quantity of motion of the exerciser can be expressed by the product of the rotary speed of the load shaft per minute multiplied by the brake torque and thus the quantity of motion can be calculated easily. The brake torque can be set easily at a desired value. That is, the present load device is ideal for use in various kinds of fitness equipment. Also, due to the fact that an E-shaped core is employed and the side surfaces of the two rotary disks are positioned so as to be received in two slits formed between the stator core and a front stator core portion, the radii of the two rotary disks can be respectively reduced to one half of the conventional size one and the moment of inertia can also be reduced to one half of the conventional amount while maintaining a brake force that is equal to that of the conventional load device. Therefore, in designing various fitness equipment, use of the present load device reduces the size and increases the freedom of design in arranging the positions of various peripheral devices.

### BRIEF DESCRIPTION ON THE DRAWINGS

Fig. 1 is a perspective view of the main portions of a stepper-type fitness apparatus according to the first embodiment of the invention;
Fig. 2 is a perspective view of portions of the embodiment shown in Fig. 1;
Fig. 3 is a perspective view of the load device according to the first preferred embodiment;
Fig. 4 is block diagram of a control part of the load device illustrated in Fig. 3;
Fig. 5 is a perspective view of the main portions of a load machine according to a second embodiment of the invention;
Figs. 6 (a) and (b) are front and side views respectively of the main portions of a rowing machine according to a third embodiment of the invention;
Fig. 7 is a side view of the main portions of upper arm training equipment according to the fourth embodiment of the invention; and,
Fig. 8 is a side view of the main portions of leg training equipment according to the fifth embodiment of the invention.

### DETAILED DESCRIPTION OF THE PREFERRED EMBODIMENT

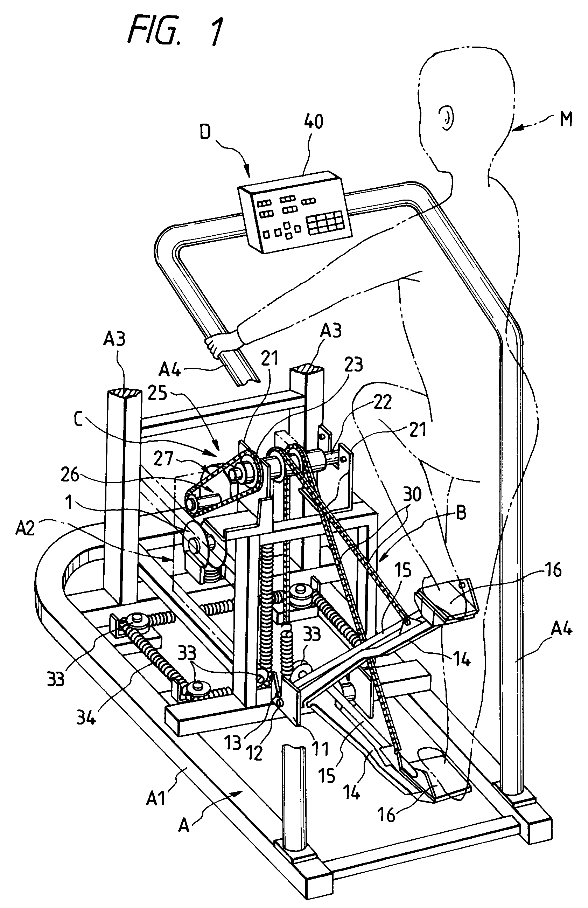

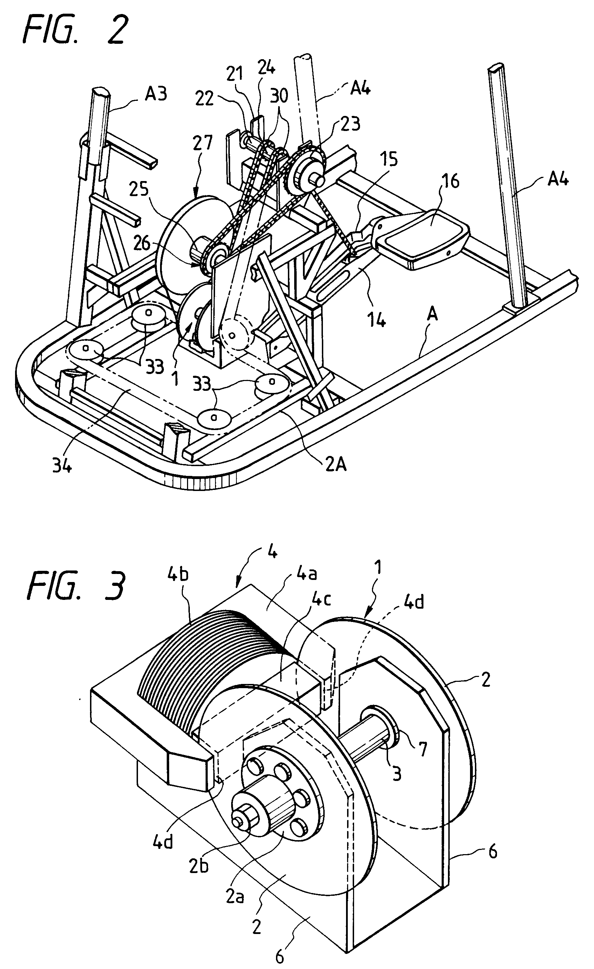

A detailed description of the preferred embodiments of the invention is given below with reference to Figs. 1 to 8.

Figs. 1 to 4 illustrate an embodiment of a stepper-type fitness apparatus incorporating a load device therein according to the invention.

The stepper-type fitness apparatus includes a frame part A, a crank pedal part (operation part) B, a drive part C (including a crank pedal return mechanism), and a control part D.

The frame part A comprises a base frame A1 arranged in a double cross, a center frame A2 disposed on the base frame Al, a pair of posts A3 erected vertically in the front portion of the base frame A1 at a given distance from each other, and a pair of side guards A4 which are erected substantially vertically in the rear portion of the base frame A1 at a given distance from each other, the upper portions of which are bent toward the posts A3 with the leading ends thereof connected to the upper ends of the posts A3, respectively.

The crank pedal part B (that is, an operation part through which an exerciser accomplishes a given kind of exercise) is a known arrangement and includes a pair of brackets 11 erected longitudinally at substantially a central position of the base frame A1 at a given distance from each other, a pivot shaft 12 and a pair of link shafts 13 which extend transversely with respect to the brackets 11 and in parallel to each other, a pair of arms 14 and a pair of links 15 provided such that the base ends thereof are pivotally mounted to the pivot shaft 12 and link shafts 13 and can be swung vertically. A pair of right and left steps 16 are pivotally mounted on the leading ends of the right and left arms and links 15 in such a manner that the upper surfaces thereof can be always maintained in a horizontal position.

The drive part C comprises a drive shaft 22 which extends transversely along a pair of bearings 21 which are erected at a given distance from each other longitudinally on the center frame A2 disposed near the front end portion of the base frame A1. A sprocket 23 is fixedly mounted on one side of the drive shaft 22, and a pair of right and left freewheel sprockets 24 are disposed on drive shaft 22. An accelerator 28, including a sprocket 26 fixed to one side of a rotary shaft 25, is disposed in the center of frame A2 and a large pulley 27 is provided on the other side of the rotary shaft 25. A load device 1 is disposed below the accelerator 28.

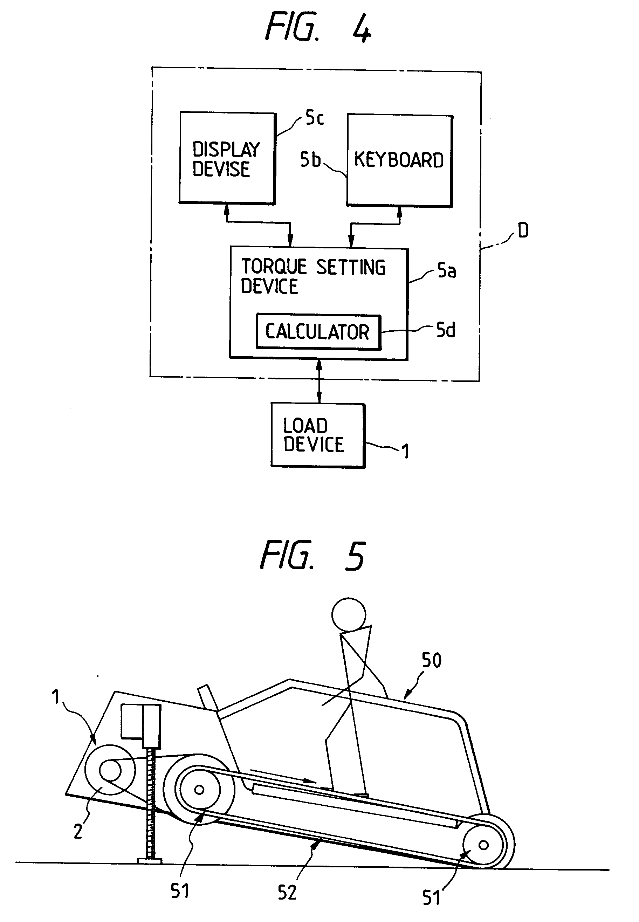

Figure 3 illustrates the load device 1 in detail. A pair of thin rotary disks 2, 2 each having a size that is one half that of the conventional rotary disk, are arranged parallel to each other on a rotary load shaft 3 at a given distance from each other. The rotary load shaft 3 is supported by frames 6 having bearings 7. An electromagnet 4 is arranged on the side surface side of the rotary disks 2 whereby a magnetic flux generated due to the electromagnet 4 can be applied to both of the rotary disks 2 so that a brake torque can be imported to resist the rotational movement of the two rotary disks 2.

The electromagnet 4 includes a stator core 4a, an exciting coil 4b wound around a central extending portion of the stator core 4a, and a front stator core 4c. Two slits 4d are formed respectively between the stator core 4a and the front stator core 4c. The pair of rotary disks 2, 2 each having a radius one-half that of the conventional single rotary disk, are arranged to extend into the respective slits 4d in such a manner that the respective side surfaces thereof are not in contact with the stator 4a and front stator core 4c.

The electromagnet 4 is coupled to the control part D which is used to control a current to be applied to the exciting coil 4b, so that the quantity of current to be applied to the exciting coil 4b can be adjusted and thus the control torque to be applied to the two rotary disks 2, 2 can be adjusted by the control part D. Control part D can be similar to known devices for applying load currents.

A flange 2a and a plurality of a nuts 2b, used to fix each of the two rotary disks to the rotary 1 and shaft 3, are formed of material having low specific gravity such as aluminum or the like.

Also, a structure for driving the freewheel sprockets 24, accelerator 28 and load device 1 is arranged such that the movements of two chains 30 respectively having one-side ends thereof connected to the respective portions of the right and left arms 14 existing adjacent to the respective steps 16 thereof drives accelerator 28 and load device 1. That is, the movements of the two chains 30 movable in response to the vertical swinging motion of the two arms 14 can be transmitted to the two freewheel sprockets 24 disposed on the drive shaft 22 at a given distance from each other. The rotation of the drive shaft 22 is converted into one-way rotation by the freewheel sprockets 24 and is transmitted to the large pulley 27 through a chain 31 wound around the sprocket 23 provided on one side of the drive shaft 22 and the sprocket 26 provided on one side of the rotary shaft 25. The rotation accelerated by the large pulley 27 can be transmitted through a timing belt 32 wound around the large pulley 27 to a timing pulley (not shown) mounted on an input shaft of the load device 1, thereby being able to drive the freewheel sprockets 24, accelerator 28 and load device 1.

On the other hand, the free ends of the right and left chains 30, each having one end thereof connected to the arms 14 are respectively connected to the two ends of a spring 34 which is wound not only around the right and left freewheel sprockets 24 but also around a total of six pulleys 33 consisting of two pulleys arranged substantially in the central position of the base frame A1, two pulleys arranged on the right and left of the central position, and two pulleys arranged on the right and left of the front portion of the base frame A1, in order to be able to allow the smooth movement of the two chains 30 in response to the vertical swinging motion of the right and left arms 14.

The control part D includes a box member 40 mounted substantially in the central position of a U-shaped portion formed by the respective upper end portions of the two side guards A4, a torque setting device 5a (which comprises a calculator 5d to calculate the quantity of current to be applied to the exciting coil 4b), a keyboard 5b used to input a brake torque desired by an exerciser or a user to the torque setting device 5a, and a display device 5c for displaying the brake torque. The latter three components are respectively incorporated in the box member 40.

The display device 5c is arranged such that the load level, age, distinction of sex, weight, time, elapsed time, consumed calories, and the like can be displayed while they are simultaneously calculated by the calculator 5d in a known manner.

As illustrated in Figure 4, the control part D is composed of the torque setting device 5a, the keyboard 5b for inputting a brake torque desired by the user (a load equivalent to the locomotive power of the user) into the torque setting device 5a, and the display device 5c for displaying the brake torque.

Also, the torque setting device 5a is composed of the calculator 5d which calculates the quantity of current to be applied to the exciting coil 4b. In order words, a brake torque = K + f (I) (where, K expresses a given torque independent from a current and f (I) expresses a torque to be controlled by a current), which is obtained by the calculator 5d, is applied to the exciting coil 4b so that the resistance rotation of the two rotary disks 2, 2 can be controlled.

Now, description will be given of the operation of the above-mentioned stepper-type fitness apparatus.

An exerciser M, as shown in Fig. 1, places their legs on the right and left steps 16, 16 respectively and puts weight on the right and left legs alternately to push down the right and left arms 14, 14 alternately. Due to this stepping operation, the right and left arms 14, 14 are rotated back and forth through a given angle about the pivot shaft 12 in a known manner.

For example, if the left arm 14 shown by a solid line in Fig. 1, is pedaled down by the left leg of the exerciser M, then the chain 30 connected with the front portion of the step 16 of the left arm 14 is pulled down with the lowering movement of the left arm 14.

As a result of this, the freewheel sprockets 24 with the chain 30 wound therearound are rotated and the rotation of the freewheel sprockets 24 in turn causes the drive shaft 22 inserted through the freewheel sprockets 24 to rotate in one direction. The rotation of the driven shaft 22 is input to the large pulley 27 through the chain 31 wound around the sprocket 23 fixed to one side of the drive shaft 22 and the sprocket 26 mounted on the rotary shaft 25 of the large pulley 27. The rotational speed of the large pulley 27 is accelerated, or increased, up to a previously set given number of rotations and is then transmitted through the timing belt 32 wound around the large pulley 27 to the timing pulley and finally to the load device 1, thereby causing the load device 1 to rotate.

Here, since the end portion of the left chain 30, which is pulled out when the arm 14 is pedaled down is connected through the spring 34 to the right chain 30, the movement of the left chain 30 is transmitted through the spring 34 to the right chain 30. Before this state, as shown by a solid line in Fig. 1, the right chain 30 is pulled out backwardly by the right arm 14. However, because the spring 34 is now moved in the left direction with the downward movement of the left chain 30 to thereby pull the right chain 30, the downwardly rotated right arm 14 is urged to move upwardly. That is, at the time of completion of the pedaling-down of the left arm 14 by the left leg of the exerciser M, if the exerciser M pulls their right leg upwardly according to the normal stepping operation to thereby remove their weight from the right step 16 by the right leg, then the right arm 14 pulled by the right chain 30 is smoothly moved upwardly.

When the exerciser M completes the pedaling-down operation of the left leg, the step 16 pivotally mounted on the right arm 14 is moved upwardly. Therefore, the exerciser M then pushes down on the upwardly situated right leg as the next operation.

If the exerciser M puts the load onto the right step 16 by the right leg to thereby pushes down the right arm 14, then the chain 30 connected to the front portion of the pedal 16 of the right arm 14 is moved downwardly to thereby rotate the freewheel sprockets 24 around which the chain 30 is wound. And, the rotation of the freewheel sprockets 24 in turn rotates the drive shaft 22, which is inserted into the freewheel sprockets 24, in one direction. Then, the rotation of the drive shaft 22, similarly to the above-mentioned pedaling-down of the left step 16, is input to the large pulley 27 through the chain 31 wound around the sprocket 23 fixed to on side of the drive shaft 22 and the sprocket 26 mounted on the rotary shaft 25 of the large pulley 27. The rotation input to the large pulley 27 is increased up to the previously set given number of rotations and is then transmitted through the timing belt 32 wound around the large pulley 27 to the timing pulley and finally to the load device 1 to thereby rotate the load device 1. It is to be noted that freewheel sprockets 24 are coupled to shaft 22 through a one-way ratchet mechanism in a known manner.

Since the end portion of the right chain 30 to be pulled out due to the pushing down of the right arm 14 is connected through the spring 34 to the left chain 30, the movement of the right chain 30 is transmitted through the spring 34 to the left chain 30. Although the left chain 30 is now pulled down due to the downward movement of the left step 16, the spring 34 is moved with the downward motion of the right chain 30 to thereby pull the left chain 30, with the result that the downwardly rotated left arm 14 is pulled upwardly. That is, at the time of completion of the pushing-down of the right step 16 by the right leg of the exerciser M, if the exerciser M pulls their left leg upwardly to remove their weight from the left step 16 by the left leg according to the normal stepping operation, then the left arm 14 pulled by the left chain 30 is smoothly moved upwardly.

The load of the load device 1 during the above-mentioned exercise, that is, the brake torque is controlled to the given torque set by the torque setting device 5a in a known manner. The brake torque = K + f (I) is provided so that the optimum load can be applied to the exerciser M.

Fig. 5 shows a second embodiment of the invention, treadmill 50. If an exerciser, who stands on an endless belt 52 wound around a pair of right and left rollers 51, walks or runs on the endless belt 52, then the endless belt 52 is moved in one direction to rotate and drive the rollers 51. The rotational driving motion of the rollers 51 is then transmitted to a pair of rotary disks 2, 2 forming the load device 1, and a given load is applied to the endless belt 52 due to the brake torques of the rotary disks 2, 2 in a manner similar to the embodiment above.

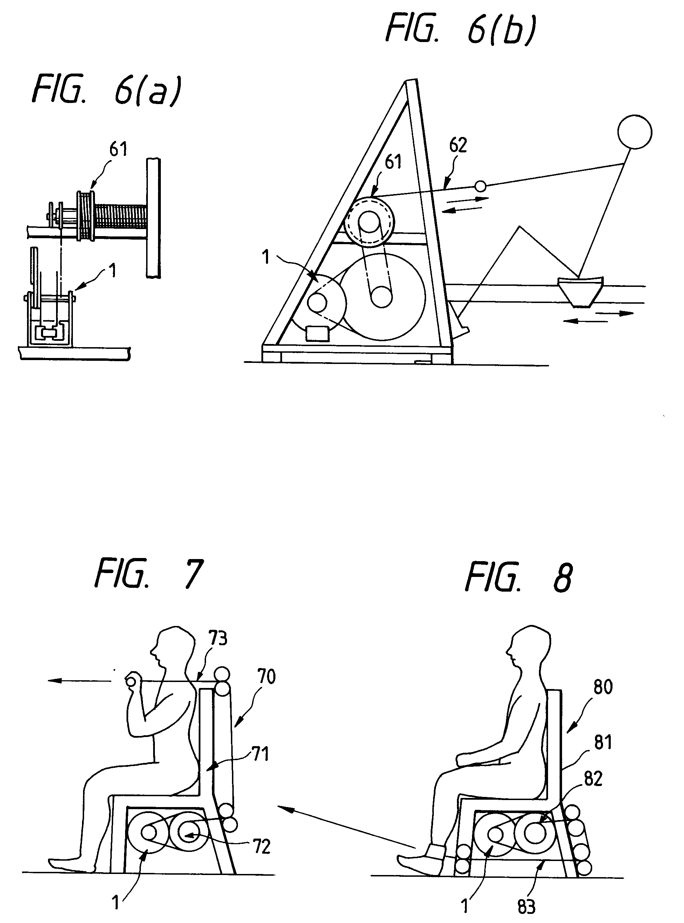

Figs. 6 (a) and (b) respectively show a third embodiment, a rowing machine according to the invention. In this rowing machine 60, after an exerciser grasps a rope 62, which is wound around a drum 61 with both hands while bending their body forwardly and flexing both legs, the exerciser extends both bent legs and at the same time moves the position of their whole body backwardly while extending backwardly the forwardly bent body to pull out the rope 62 from the machine 60, thereby accomplishing a known rowing stroke. In the present rowing machine 60, a given load is applied to the drum 61 by the load device 1 which is connected to the drum 61. Of course, load device 1 is similar to the embodiments above.

Fig. 7 shows a fourth embodiment, an upper arm training machine according to the invention. In the upper arm training machine 70, after the end portion of a rope 73, which is wound around a drum 72 disposed under a chair 71, is positioned over the shoulder of an exerciser sitting on the chair 71 and the exerciser grasps the end portion of the rope 73, the exerciser thrusts out their hands forwardly to extend their arms. Due to this arm extension, the rope 73 is pulled out from the machine 70 and the drum 72 is thus rotated. A given load is applied to the drum 72 by the load device 1 which is connected to the drum 72.

Fig. 8 shows a fifth embodiment, a leg training machine according to the invention. In the leg training machine 80, the end portion of a rope 83, which is wound around a drum 82 located under a chair 81 is guided in front of the chair 81 and is then secured to the ankle of an exerciser sitting on the chair 81 while bending his or her leg. Then, if the exerciser kicks out their foot forwardly to extend their leg, the rope 83 is pulled out forwardly from the leg training machine 80 and the drum 82 is thus rotated. A given load is applied to the drum 82 by the load device 1 which is linked to the drum 82.

As has been described above, according to the invention, there is provided fitness equipment which includes a drive part having a load device, in which a pair of rotary disks are disposed on a rotary load shaft in parallel to each other. An electromagnet is disposed on the side surface side of the two rotary disks, and a magnetic flux generated by the electromagnet can be applied to the two rotary disks to thereby apply a brake torque to the rotation of the two rotary disks. The load of the drive part can be controlled by the control part to the optimum work-out load to be applied to the exerciser, thereby allowing the exerciser to achieve a desired work-out. Due to this structure, the brake torque based on the current control can be adjusted easily, the quantity of work-out of the exerciser can be calculated with ease because it is expressed by the product of the rotation speed of the load shaft per minute by the brake torque, and the brake torque can be set to an arbitrary and given value. That is, the load device according to the invention can be used as an ideal load device in various kinds of known fitness equipment. Also, in the present invention, due to the fact that on E-shaped core is employed and the two rotary disks are disposed to be received in the slits between the stator core and the front stator core, when compared with the conventional equipment using a single rotary disk, the radius of each of the two rotary disks can be reduced to one half, and the moment of inertia thereof can also be reduced to one half while the brake torque is similar to one provided by the conventional load device using a single rotary disk. In other words, the load device according to the invention allows freedom in the design of various kinds of fitness equipment because the load device is compact.

## Claims

1. A fitness apparatus comprising:
an operation part which can be moved by an exerciser;
a drive part comprising a load device, said drive part being connected to said operation part to be driven by movement of said operation part, said load device including a pair of rotary disks disposed in parallel to each other on a shaft and an electromagnet provided proximate a side surface of each of said two rotary disks, a magnetic flux generated by said electromagnet being applied to said two rotary disks to thereby impart a brake torque to oppose the rotation of said two rotary disks;
a control part which applies a desired current to said electromagnet to provide an optimum work-out load to resist movement of said drive part thereby allowing said exerciser to achieve a desired work-out.

2. A fitness apparatus as set forth in claim 1, said electromagnet comprising:
a stator core having a rear portion, a front portion disposed essentially parallel to said rear portion, two side portions connecting respective ends of said front and rear portions, a central portion extending from a center portion of said rear portion to a center portion of said front portion, and a coil wound around said center portion, said front portion having two slits formed therein formed therein and portions of said rotary disks being received in respective ones of said slits.

3. A fitness apparatus as set forth in Claim 2, wherein said drive part includes a drive shaft disposed to extend transversely between a pair of bearings erected longitudinally at a given distance from each other on a center frame located near a front end portion of said apparatus, a first sprocket fixedly mounted on one side of said drive shaft, a pair of right and left freewheel sprockets respectively disposed on said drive shaft, an accelerator including a second sprocket fixed to one side of a rotary shaft supported on said center frame and a large pulley provided on the other side of said rotary shaft;
and wherein said drive part comprises a pair of arms which are pivotally mounted on said apparatus, said arms each having steps formed on one end thereof, respectively, a pair of chains being connected at one end thereof to respective ones of said arms, said chains being coupled to said freewheel sprockets respectively so that motion of said arms rotates said freewheel sprockets, said freewheel sprockets being ratchet coupled to said drive shaft so that the rotation of said freewheel sprockets is converted into one-way rotation of said drive shaft and is transmitted to said large pulley through a chain wound around said first sprocket and said second sprocket, and said rotation of said large pulley is transmitted to an input shaft of said load device through a timing belt wound around said large pulley said input shaft.

4. A fitness apparatus as set forth in Claim 2, wherein said operation part comprises an endless belt wound around rollers, said rollers being rotated in response to movement of said endless belt and the rotation of said rollers being transmitted to said load device so that a given load can be applied to said endless belt by said load device.

5. A fitness apparatus as set forth in Claim 2, wherein said operation part comprises a rope wound around a drum, said exerciser grasping said rope while bending forwardly and extends their bent legs and body to pull out said rope to thereby rotate said drum, said drum being coupled to said load device so that a given load can be applied to said rope.

6. A fitness apparatus as set forth in Claim 2, wherein said operation part comprises a rope wound around a drum disposed under a chair and guided over the shoulder of an exerciser sitting on said chair, and said exerciser grasps said rope end portion with both hands while bending their arms and then thrusts both hands out together to pull the rope end portion and thereby rotate said drum, said load device being coupled to said drum so that a given load can be applied to said rope.

7. A fitness apparatus as set forth in Claim 2, wherein said operation part comprises a rope wound around a drum disposed under a chair and guided in front of a lower portion of said chair and is then to the ankle of an exerciser sitting on said chair, said exerciser kicks out their legs forwardly to thereby rotate said drum, said load device being coupled to said drum to apply a given load to said rope.
